Europäisches Patentamt

European Patent Office

Office européen des brevets

Publication number: **0 011 905**

**A1**

# EUROPEAN PATENT APPLICATION

21 Application number: 79200697.5

22 Date of filing: 29.11.79

51 Int. Cl.³: **A 01 D 55/262**

30 Priority: 04.12.78 NL 7811810
04.12.78 NL 7811809

Date of publication of application:
11.06.80 Bulletin 80. 12

Designated Contracting States:
DE FR GB NL

71 Applicant: Patent Concern N.V.
Handelskade 24
Willemstad Curaçao (N.A.)(NL)

72 Inventor: Van der Lely, Cornelis
Brüschenrain 7
ZUG(CH)

74 Representative: Mulder, Herman et al,
Weverskade 10 P.O. Box 26
NL-3155 ZG Maasland(NL)

54 A mowing machine.

57 A mowing machine comprises two reciprocatory cutter members (46, 47) disposed one above the other for movement in opposite directions to cut crop with a scissor action. The cutter members are resiliently displaceable against the action of springs (42, 43) to avoid damage if, for example, stones are encountered. The cutter members are fitted to a support (2) in a manner which renders them readily removable by displacing them in a direction transverse of the direction (94) of reciprocation.

EP 0 011 905 A1

FIG.4

1

# A MOWING MACHINE

This invention relates to a mowing machine comprising a frame on which at least one reciprocatory cutting member is mounted, drive means being provided for driving the cutting member in reciprocation.

According to a frist aspect of the present invention there is provided a mowing machine comprising a frame on which at least one reciprocatory cutting member is mounted, drive means being provided for driving the cutting member in reciprocation, characterised in that the frame comprising a frame portion extending along said cutting member whereby the cutting member is displaceable with respect to the support in a direction having at least a component parallel to the intended direction of operative travel of the machine.

A mowing machine in accordance with this aspect of the present invention can effectively operate without the risk of damage of the cutting member. The crop can be safely and rapidly cut with a low energy consumption. The manufacturing costs of the mowing machine can be kept low.

According to a second aspect of the present invention, there is provided a mowing machine comprising a frame on which at least one reciprocatory cutting member is mounted, drive means being provided for driving the cutting member in reciprocation, characterised in that the frame comprising a frame portion extending along said cutting member whereby the cutting member is resiliently displaceable with respect to the frame portion in a direction having a component parallel to the intended direction of operative travel of the machine.

In an advantageous embodiment, the cutting member is connected to the frame portion by means of at least one rod which is connected displaceably to the frame portion.

According to a third aspect of the present invention there is provided a mowing machine comprising a frame on which at least one cutting member is mounted, drive means being provided for driving the cutting member in reciprocation, characterised in that the drive means cause the cutting member to vibrate during operation of the machine thereby to cut crop.

Advantageously the mowing machine is provided with two cutting members arranged so as to be movable relatively to one another and relatively to the frame portion, the cutting members being caused to vibrate in opposite senses by the driving means.

According to a fourth aspect of the present invention there is provided a mowing machine as mentioned here before, whereby the or each cutter member comprises a steel band. With this construction satisfactorily operating cutting members can be manufactured in a simple manner.

According to a fifth aspect of the present invention there is provided a mowing machine comprising a frame on which a reciprocatory cutting member is mounted, drive means being provided for driving the cutting member in reciprocation, characterised in that the cutting member is fitted to the frame portion in a readily releasable manner.

When, for example, the cutting edges become blunt, the cutting member can be readily replaced by another or it may be readily removed for repair.

According to a sixth aspect of the present invention there is provided a mowing machine comprising a frame on which ... is mounted. Drive means

being provided for driving the cutting member during operation of the machine characterised in that the cutting member is fitted to a carrier which extends over the working width of the machine in a readily releasable manner.

According to an advantageous embodiment the cutting member is provided with teeth each having a length less than 10 mm.

According to a further aspect of the present invention there is provided a mowing machine comprising a frame on which at least one reciprocatory cutting member is mounted, driving means being provided for driving the cutting member in reciprocation, characterised in that the or each reciprocatory cutting member co-operates with a drum for displacing cut crop.

For a better understanding of the present invention and to show how it may be carried into effect, reference will now be made, by way of example, to the accompanying drawings, in which:

Figure 1 is a rear view of a mowing machine hitched to a tractor;

Figure 2 is a plan view of the mowing machine and part of the tractor of Figure 1;

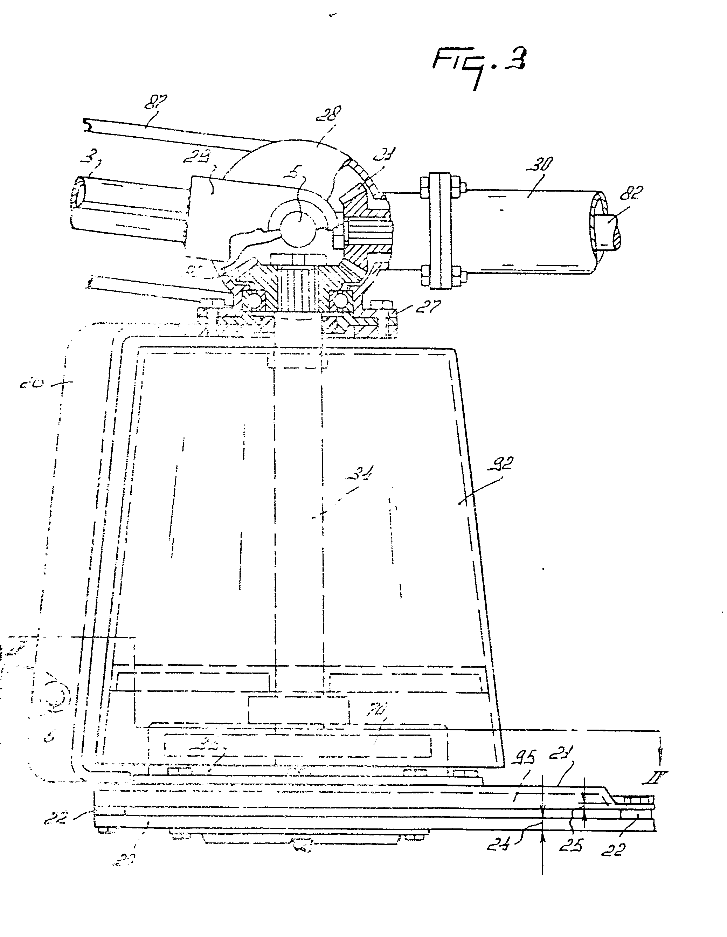

Figure 3 is a partly sectioned view taken in the direction of the arrow III in Figure 2;

Figure 4 is a sectional view taken on the line IV-IV in Figure 3;

Figure 5 is a sectional view taken on the lines V-V in Figure 4;

Figure 6 is a sectional view taken on the line VI-VI in Figure 4;

Figure 7 is a sectional view taken on the line VII-VII in Figure 4; and

Figure 8 is a sectional view taken on the line VIII-VIII in Figure 4.

The mowing machine 1 comprises a cutter bar 2 which is connected to a coupling frame by hinge arms 3 and 4 forming an intermediate frame. The hing arms 3 and 4 are

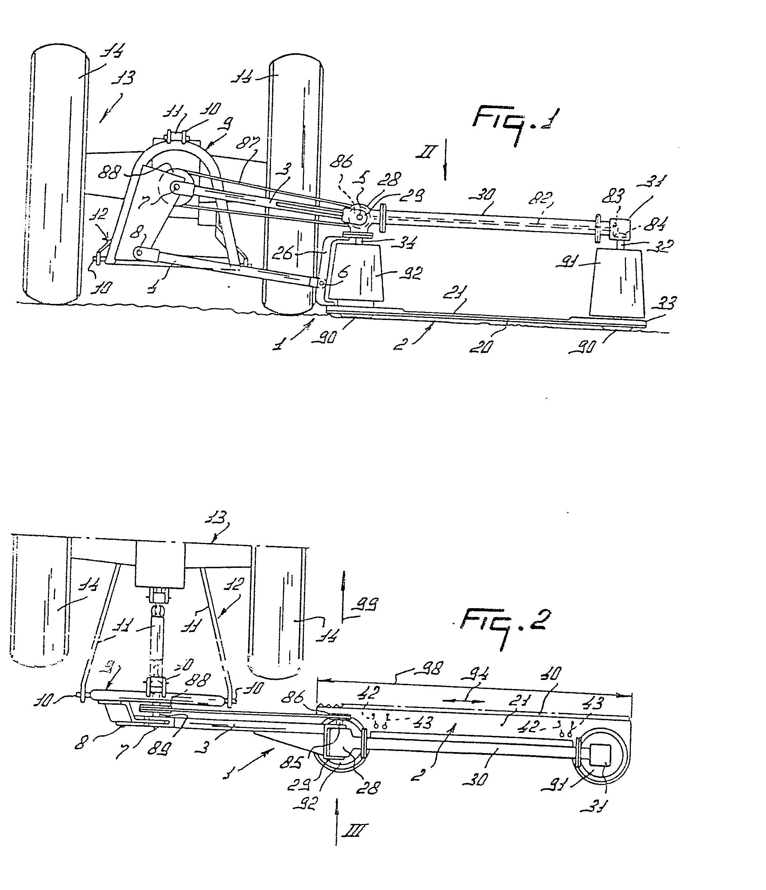

connected to the coupling frame 9 by pivotal shafts 7
and 8 and to the cutter bar 2 by pivotal shafts 5 and 6.
The pivotal shafts 5, 6, 7 and 8 are disposed so that
the hinge arms 3 and 4 constitute a parallelogram linkage
so that the cutter bar 2 is capable of swinging vertically parallel to itself with respect to the coupling
frame 9. The coupling frame 9 is provided with coupling
means 10 by which the coupling frame 9 and hence the
mowing machine 1 can be hitched to the arms 11 of the
lifting device 12 of a tractor 13 as is illustrated in
Figures 1 and 2. In this construction the tractor 13
with the wheels 14 constitutes a wheel-supported carrying
frame for the mowing machine 1. However the mower may
alternatively be coupled in a different manner with a
vehicle or carrying frame supported by ground wheels or
other members.

The cutter bar 2 comprises a frame portion in the form of
a support made up of a member 20 forming a bottom plate
and a member 21, above the bottom plate 20, forming a top
plate. The top plate 21 has a kink in it as shown in Figure 6. The plates 20 and 21 are spaced apart from one
another by spacer blocks 22 and are interconnected by
bolts 23. The thickness of the bottom plate 20 is about
2.5-times that of the top plate 21. For example, the
thickness of the plate 20 is about 8 mms and that of the
plate 21 is about 3mms. The support constituted by the
plates 20 and 21 is rigidly connected to a bracket 26, to
which the hinge arm 4 is connected by the pivotal shaft
6. The bracket 26 extends upwards from the plate 21 and is
connected at the top to a housing 28, which has a flange
27 by which it is fastened to the bracket 26. The housing
28 lies between the arms of a fork 29 of the hinge arm 3
and is pivotably connected to the arm 3 by the pivotal
shaft 5. The housing 28 is firmly bolted to a tube 30,
which extends parallel to the lengths of the plates 20 and
21 and is located above them. The tube 30 is bolted to a
gear box 31 in which the top end of a shaft 32 is situated.
The lower end of the shaft 32 is journalled in a bearing

housing 33, which is provided near one end of the beam constituted by the plates 20 and 21. At the ends of the plates 20 and 21 nearer the arms 3 and 4 there is a gear box 35. This gear box 35 accommodates the lower end of a shaft 34, the top end of which is journalled in the housing 28.

Cutting members 46 and 47 are movably supported between the plates 20 and 21. The cutting members 46 and 47 are fastened to carriers 40 and 41.

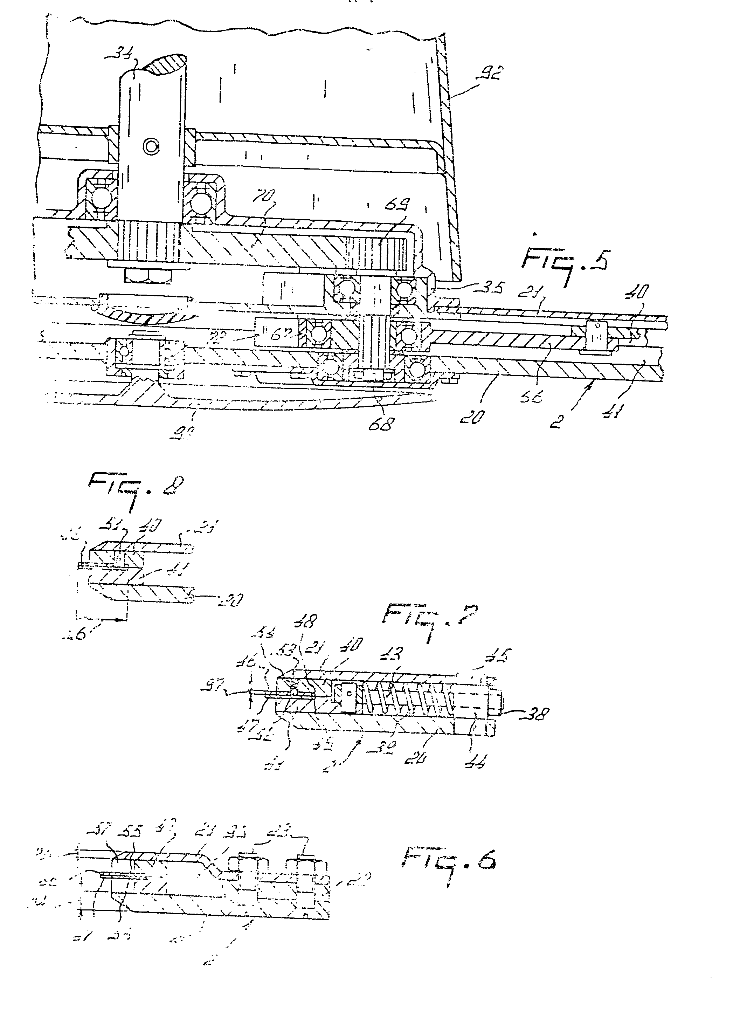

The carriers 40 and 41 are retained against vertical movement between the plates 20 and 21 (see Figures 5 to 8). The carrier 40 is pivoted to two rods 42, and the carrier 41 is pivoted to two rods 43, the rods 42 and 43 are slidable in guide blocks 44, which are mounted by trunnions 45 between the plates 20 and 21. The rods 42 and 43 are pivotally arranged on the carriers 40 and 41 between the plates 20 and 21 in a manner such that the carriers 40 and 41 can reciprocate substantially lenthwise, while remaining parallel to themselves, relatively to the plates 20 and 21. The rods 42 and 43 together with the parts coupled to them constitute parallelogram linkages.

The cutting members 46 and 47 are disposed in recesses 48 and 49 respectively in the carriers 40 and 41. The carrier 40 is provided with at least one retaining pin 51, which projects into a recess 50 in the cutting member 46. The pin 51 and the recess 50 constitute retaining means for coupling the cutting member to the carrier 40 so that the cutting member 46 reciprocates with the carrier 40 in the lenthwise direction of the carrier 40 and of the cutting member 46. In the same manner the cutting member 47 is coupled with the carrier 41 by one or more retaining pins. The cutting member 46 is also coupled to the carrier 40 by a detent 52 comprising a ball which is pressed into a hole in the cutting member 46 by a compression spring 53 situated in a bore 54 in the carrier 40 (Figure 7). In the same manner the cutting member 47 is retained by another spring-loaded ball with respect to the carrier 41. The detents 52 serve to prevent the cutting member 46 and

0011905

47 from moving with respect to the carriers 40 and 41 in the direction transverse to the length of the carriers. The cutting members 46 and 47 have, at one or more places, openings 55, 56 which are preferably located one above the other in the cutting member 46 and 47. These recesses 55, 56 are provided in the cutting members in the region of one or more notches 57 in the carriers 40 and 41 respectively.

Each of the cutting members 46 and 47 is serrated to provide teeth 61, the length of these from tip to root being about 5 mm. The teeth 61 are preferably not longer than 10 mm. The pitch 63 of the teeth is less than 30 mm. In this embodiment the pitch 63 is about 6 to 7 mm.

The carrier 40, and hence the cutting member 46, is coupled with a connecting rod 66 of an eccentric mechanism 67 mounted on a shaft 68. The shaft 68 carries a pinion 69 which is located above the eccentric mechanism 67 and meshes with a pinion 70, which is rigidly secured to the shaft 34. The carrier 41, and hence the cutting member 47, is coupled with a connecting rod 71 of an eccentric mechanism 72 mounted on a shaft 73. The shaft 73 has a pinion 74 which corresponds to the pinion 69 and also meshes with the pinion 70. The pinion 70 has ten times more teeth than each of the pinions 69 and 74. The shafts 68 and 73, as is illustrated in Figure 5 for the shaft 68, are journalled in bearings fastened to the plates 20 and 21 within the gear box 35.

The top end of the shaft 34 is provided with a bevel pinion 80 situated in the housing 28 and meshing with a pinion 81, which is rigidly secured to a shaft 82 journalled in the tube 30. The end of the shaft 82 journalled in the gear box 31 is provided with a bevel pinion 83, which meshes with a bevel pinion 84 on the shaft 32. A shaft 85, which is coaxial with the pivotal shaft 5, projects into the gear box 28. The shaft 85 is provided outside the gear box 28 with a pulley 86 around which runs a belt or rope 87. The belt or rope 87 also runs around a pulley 88 in the supporting frame 9. The pulley 88 is mounted on a

shaft 89 which is provided at the front with a stub shaft for connection to an intermediate shaft so that the shaft 89 can be coupled with the power take-off shaft of the tractor 13. Inside the gear box 28 the shaft 85 is provided with a bevel pinion (not shown) meshing with the bevel pinion 80 on the shaft 34.

The cutting members 46 and 47 with their carriers 40 and 41 are resiliently movable to the rear, the rods 42 and 43 then sliding in their supporting blocks 44 against the action of the springs 39 surrounding the rods 42 and 43. On the side of the blocks 44 away from the springs 39 the rods 42 and 43 are provided with stops 38 which prevent the rods 42 and 43 from sliding completely out of the blocks 44.

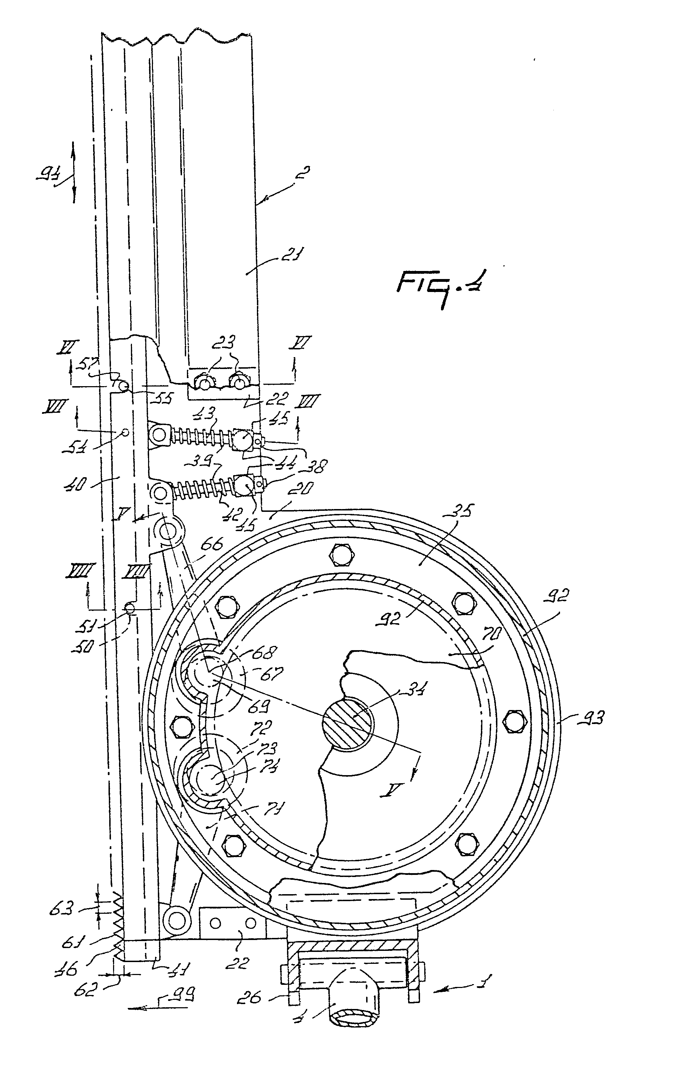

To the shafts 32 and 34 extending upwards from the plates 20 and 21 are fitted delivery drums 91 and 92. These delivery drums 91 and 92 are bodies of revolution which are coaxial with the shafts 32 and 34. The drums are frusto conical and taper from bottom to top. The delivery drum 92 is located between the ends of the frame bracket 26 and its top is at a slightly lower level than that of the delivery drum 92, as is shown in Figure 1. The drums 91 and 92 are arranged near the ends of the plates 20 and 21. The lower ends of the drums 91 and 92 have a diameter which corresponds to the diameter of the bearing housings 33 and 35 accommodating the bearings for the shafts 32 and 34. The cutter bar formed by the plates 20 and 21 with the cutting members 46 and 47 is provided near its ends with supporting dishes 90, which are coaxial with the shafts 32 and 34. The lower plate 20 has wider portions 93 near its ends (see Figure 4), each having a semi-circular shape to the rear, with respect to the intended direction 99 of operative travel of the machine. The radius of this semi-circle corresponds substantially to the diameter of the gear box 35 containing the pinions 70, 69 and 74. The radius of the curved part of the wider portion 93 also corresponds substantially with the radius of the lower end of the drum 92.

Although Figure 4 shows the cutter teeth 61 of the cutting members 46 and 47 to be exactly located one above the other, the cutting members 46 and 47 may alternatively be arranged so that the teeth of one cutting member are off-set relatively to the teeth of the other cutting member in the position of the eccentric arms 66 and 71 illustrated in Figure 4. The width of each cutting member 46 and 47 is about 25 mms. The cutting members 46 and 47 are made from steel band having a thickness 97 of about 1 mm. The length 98 of the cutting members is about 1600 mms. The length 98 exceeds 100-times the thickness 97.

The machine operates as follows:

For mowing standing crop, the machine 1 is hitched to the lift 12 of a tractor or a similar vehicle. The shaft 89 is coupled to the power take-off shaft of the tractor so that via the belt or rope 87 and the pulleys 88 and 86 the shaft 85 is driven. From the shaft 85 the driving shaft 34 for the drum 92 and the cutting members 46 and 47 is driven as is the shaft 82 for driving the drum 91 through the bevel gear wheels 83 and 84. The drums 91 and 92 are thus rotated and the cutting members 46 and 47 are caused to reciprocate. The reciprocatory movement of the cutting members 46 and 47 is permitted by the connection of the carriers 40 and 41 to the plates 20 and 21 by the rods 42 and 43, and is caused by the eccentric mechanisms 67 and 72. The movement takes place in a direction parallel to the length of the cutting members 46 and 47 and the plates 20 and 21, i.e. in the direction of the arrow 94. The eccentric mechanisms 67 and 72 are designed so that the reciprocatory movement of the cutting members 46 and 47 with the carriers 40 and 41 has a stroke of less than 30 mms. The drive is such that the frequency of the reciprocatory movement is at least 2000 strokes a minute; in this embodiment the frequency is about 6000 strokes a minute so that the cutting members are vibrating during the operation of the mower. Owing to this reciprocatory movement the crop can be rapidly cut with a low energy consumption. The crop is cut by the cutting edges of the

teeth 61 of the cutting members 46 and 47 moving in relatively opposite directions and operating like scissors. The cutter members 46 and 47 are caused to reciprocate by the eccentric mechanisms 67 and 72 in a manner such that they always move in mutually opposite directions so that the forces produces by the reciprocatory movements of the two members balance one another.

During a normal run in the direction 99, crop cut by the cutting members 46 and 47 is conducted across the top of the plate 21 to the rear. The crop cut near the ends of the cutting members 46 and 47 will be caught by the drums 91 and 92. The directions of rotation of the drums 91 and 92 is such that, with respect to the direction 99, the facing sides of the drums move to the rear. Therefore, the crop cut near the ends of the cutting members will be displaced by the drums 91 and 92 inwardly of the cutting members and will be delivered between the drums 91 and 92. Thus the cut crop is deposited in the form of a swath, which is spaced apart from other swaths already formed and/or from adjacent areas of crop not yet cut. During the reciprocatory movement, the carriers 40 and 41 are supported on their top and bottom surfaces respectively by the plates 20 and 21, along which they will slide. The contacting surfaces of the carriers and of the contacting cutting members 46 and 47 slide one along the other (see Figures 6, 7 and 8). The carriers 40 and 41, with the cutting members 46 and 47, are capable of deflecting with respect to the plates 20 and 21 in a direction parallel to the normal direction 94 of reciprocation. This deflection of the carriers 40 and 41 with the cutting members 46 and 47 is allowed by sliding of the arms 42 and 43 in the supporting blocks 44, and takes place against the resilient action of the springs 39. If an obstacle lying on the ground is encountered, the cutting members can thus deflect to the rear with respect to the direction 99. The maximum deflection is such that the cutting members 46 and 47 with the carriers 40 and 41 can move rearwardly over a distance at least equal to the

distance in all position which the tips 61 of the cutting members 46 and 47 project beyond the front edges of the frame plates 20 and 21. Thus the cutting members 46 and 47 can be retracted completely in to the space formed between the plates 20 and 21 so as to avoid damage to the cutter teeth 61 of the cutting members by obstacles such as stones lying on the ground. The plates 20 and 21 constitute, in addition, guides for the carriers 40 and 41. When deflecting to the rear, the cutting members 46 and 47 are satisfactorily supported at the rear ends of the recesses 48 and 49. The springs 43 and the stops 39 on the spring arms 42 and 43 tend to hold the cutting members in a position such that the teeth 61 are located substantially completely beyond the front edge of the guiding plates 20 and 21. The pressure of the springs 43 and 43 may, if desired, be adjustable in order to control the pressure at which the cutters will deflect to the rear.

Since the rods 42 and 43 extend at least substantially parallel to the direction 99 and are slidable lengthwise in the blocks 44, the direction of deflection of the cutting members 46 and 47 is such that at least the radial component thereof is parallel to the direction 99. The cutting members 46 and 47 can be readily removed from the carriers 40 and 41. To this end it is only necessary to pass a pin or such like through the slots 57, into the holes 58 and 59/exert a force in the direction of the arrow 99 on the cutting members 46 and 47. This force need not be heavy in order to overcome the retaining force of the detents in the form of the balls 52 and the spring 53. The recesses 50 allow the cutting members to be released from the catching pins 51 in the carriers 40 and 41 without the need for further means. This easy removal of the cutting members is advantageous, for example, for replacing the cutting members. The cutting members can be readily inserted into the holders by the reverse procedure. The retaining pins 51 and the recesses 50 provide a satisfactory connection of each cutting member

## CLAIMS

1. A mowing machine comprising a frame on which at least one reciprocatory cutting member is mounted, drive means being provided for driving the cutting member in reciprocation, characterised in that the frame comprising a frame portion extending along said cutting member, whereby the cutting member is displaceable with respect to the frame portion in a direction having at least a component parallel to the intended direction of operative travel of the machine.

2. A mowing machine as claimed in claim 1, characterised in that the cutting member is resiliently displaceable with respect to the frame portion.

3. A mowing machine comprising a frame on which at least one reciprocatory cutting member is mounted, drive means being provided for driving the cutting member in reciprocation, characterized in that the frame comprising a frame portion extending along said cutting member, whereby the cutting member is resiliently displaceable with respect to the frame portion in a direction having a component parallel to the intended direction of operative travel of the machine

4. A mowing machine as claimed in any one of claims 1 to 3, in which the cutting member is connected to the frame portion by at least one rod which is connected displaceably to the frame portion

5. A mowing machine as claimed in claim 4, characterised in that the or each rod is slidably received in a

46 or 47 with its carrier 40 or 41, which are maintained during the reciprocatory movements.

The mowing machine as described can be manufactured at low cost. The construction described can mow crop in a safe manner without the risk of undue damage of the cutting members 46 and 47 by obstacles such as stones. The mowing machine can be coupled in a simple manner with a tractor or a similar vehicle and be driven from the power take-off shaft of the tractor. With the transmission ratio of the pinions 69 and 74 relative to the pinion 70 of 1:10 the driving shaft 34 need rotate only with a speed of 600 rev/min, whereas the eccentric mechanisms rotate about their axes with a speed of about 6000 rev/min. In this way an advantageous drive speed for the drums 91 and 92 and for the cutting members 46 and 47 is obtained. The rapid, reciprocatory movement of the cutting members 46 and 47 produces a vibratory motion with a stroke preferably not exceeding the distance between the cutter edges 63 of the cutting members.

Whilst various features of the mowing machine that have been described, and that are illustrated in the drawings, will be set forth in the following claims as inventive features, it is to be noted that the invention is not necessarily limited to these features and that it encompasses all of the features that have been described both individually and in various combinations.

supporting bearing of the frame portion.

6. A mowing machine as claimed in claim 4 or 5, characterized in that the or each rod is pivotally mounted on the frame portion.

7. A mowing machine as claimed in any one of claims 4 to 6, when appendant to claim 2 or 3, characterized in that the or each rod is surrounded by a spring permitting the resilient displacement of the cutting member.

8. A mowing machine as claimed in any one of claims 4 to 7, characterized in that the or each rod is arranged between two plates of the frame portion.

9. A mowing machine as claimed in any one of the preceding claims, characterized in that the cutting member is fitted to a carrier supported by parts of the frame portion, whereby the carrier with the cutting member is displaceable with respect to the frame portion.

10. A mowing machine as claimed in any one of the preceding claims, characterized in that the cutting member is drivable by the drive means to perform a reciprocatory, vibratory movement.

11. A mowing machine comprising a frame on which at least one cutting member is mounted, drive means being provided for driving the cutting member in reciprocation, characterized in that the drive means cause the cutting member to vibrate during operation of the machine thereby to cut crop.

12. A mowing machine as claimed in any one of the preceding claims, characterized in that the machine comprises two cutting members which, in operation, move relatively to one another and to the frame portion, the cutting members being driven, in operation, in opposite directions in a reciprocatory manner by the drive means.

13. A mowing machine as claimed in claim 12, characterized in that each of the cutting members is fitted to a carrier and in which the carriers are reciprocably connected to the frame portion so as to be movable with respect to one another and to the frame portion the carriers engaging one another.

14.     A mowing machine as claimed in any one of the preceding claims, characterized in that the or each cutting member comprises a steel band.

15.     A mowing machine as claimed in any one of the preceding claims, characterized in that the cutting member is fitted to the rest of the machine in a readily releasable manner.

16.     A mowing machine comprising a frame portion on which a reciprocatory cutting member is mounted, drive means being provided for driving the cutting member in reciprocation, characterized in that the cutting member is fitted to the frame portion in a readily releasable manner.

17.     A mowing machine as claimed in claim 15 or 16, characterized in that the cutting member is fitted to a carrier in such a way as to be removable in a direction transverse to the direction of reciprocation of the cutting member during operation.

18.     A mowing machine comprising a frame on which at least one cutting member is mounted, drive means being provided for driving the cutting member during operation of the machine characterized in that the cutting member is fitted to a carrier which extends over the working width of the machine, in a readily releasable manner

19.     A mowing machine as claimed in claim 17 or 18, characterized in that the cutting member is connected to the carrier by a self-latching detent.

20.     A mowing machine as claimed in any one of the preceding claims, characterized in that the cutting member is a strip having a length of about 1600 mm, a width of about 25 mm and a thickness of about 1 mm.

21.     A mowing machine as claimed in any one of the preceding claims, characterized in that the cutting member is provided with teeth each having a length of less than 10 mm, whereas the pitch of the teeth is less than 30 mm.

22.     A mowing machine as claimed in any one of the preceding claims, characterized in that the drive means comprises an eccentric mechanism which is driven from a dri-

ving shaft journalled in the machine.

23. A mowing machine as claimed in claim 22, characterized in that two cutting members are each driven by a respective eccentric mechanism and in which the eccentric mechanisms are located near one another and are each provided on a respective shaft provided with a respective pinion, the two pinions meshing with a common pinion on the driving shaft.

24. A mowing machine as claimed in claim 22 or 23, characterized in that the or each cutting member is caused to reciprocate in operation with a frequency of about 6000 strokes a minute.

25. A mowing machine as claimed in any one of claims 22 to 24, characterized in that the or each eccentric mechanism is located between two members forming the frame portion.

26. A mowing machine as claimed in any one of claims 22 to 25, characterized in that the driving shaft extends above the parts supporting the or each eccentric mechanism and the cutting member is coupled near the top with a transmission that can be coupled with a driving mechanism for the cutting member, the driving shaft is provided with a drum for displacing cut crop, the drum extending to a greater height than the cutting members.

27. A mowing machine comprising a frame on which at least one reciprocatory cutting member is mounted, driving means being provided for driving the cutting member in reciprocation, characterized in that the or each reciprocatory cutting member co-operates with a drum for displacing cut crop.

28. A mowing machine as claimed in claim 26 or 27, characterized in that the drum has a conical shape and tapers from bottom to top.

29. A mowing machine as claimed in any one of claims 26 to 28, characterized in that a drivable drum is provided near each end of the cutting member.

30. A mowing machine as claimed in any one of the preceding claims, characterized in that the frame portion

is pivotally coupled with an intermediate frame which
is pivotally coupled with a coupling frame provided
with fastening means for hitching the machine to a prime
mover.

31.    A mowing machine as claimed in claim 30, characterized in that the coupling frame is provided with a
driving member which can be coupled with the power take-
off shaft of a prime mover.

Fig.1

Fig.2

FIG.3

FIG.4

FIG.5

FIG.8

FIG.7

FIG.6

## DOCUMENTS CONSIDERED TO BE RELEVANT

| Category | Citation of document with indication, where appropriate, of relevant passages | Relevant to claim |
|---|---|---|
| P | <u>FR - A - 2 405 904</u> (PATENT CONCERN)<br>* Page 7, line 21 - page 9, line 12 *<br><br>& DE - A - 2 843 453<br>& NL - A - 77 10957 | 1-3,7,8 |
| | <u>US - A - 1 373 239</u> (COOK)<br>* Column 3, lines 29-41 * | 1,2,7 |
| | <u>DE - A - 1 920 3 5</u> (PACKTER)<br>* Page 4, line 27 - page 6, line 18 * | 1,4,6,10,12,22,23 |
| | <u>FR - A - 2 318 940</u> (BUSATIS-WERKE)<br>* Page 3, line 7 - page 4, line 25 * | 1,4,6,10,12,22,23 |
| | <u>AT - A - 205 719</u> (HACKFL)<br>* In its entirety * | |
| | <u>DE - B - 1 198 433</u> (MABO)<br>* Column 4, line - column, line 18 | 15,16,18 |
| | <u>FR - A - 2 014 919</u> (JUDE)<br>* Page 12, lines 11-19, 6 * | |

### CLASSIFICATION OF THE APPLICATION (Int. Cl.)

A 01 B 33/02

### TECHNICAL FIELDS SEARCHED (Int. Cl.)

A 01 B

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family,
corresponding document

The present search report has been drawn up for all claims

| Place of search | Date of completion of the search | Examiner |
|---|---|---|
| The Hague | | LAMEL |

**BAD ORIGINAL**

**EUROPEAN SEARCH REPORT**

European Patent Office

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | NL - A - 66 05141 (PHILIPS)<br>* Page 6, lines 6-13; figures 5,6 * | 22,23,<br>25,26 | |
| | US - A - 3 973 378 (BARTASEVICH)<br>* Column 5, lines 14-48 * | 22,23,<br>26 | |
| | CH - A - 425 311 (BUCHER-GUYER)<br>* Page 1, lines 43-72 * | 26,27,<br>29 | TECHNICAL FIELDS SEARCHED (Int. Cl. 3) |
| | US - A - 3 154 902 (HALLS)<br>* Column 2, line 67 - column 3, line 27; figures 1,2 * | 30,31 | |

EPO Form 1503.2  06.78